# EUROPEAN PATENT APPLICATION

(11) **EP 3 486 430 A1**
(43) Date of publication of application: **22.05.2019**
(21) Application number: 17202207.1
(22) Date of filing: 17.11.2017
(51) Int. Cl.: F01D 5/34, B22F 5/00, B22F 5/04, B23P 15/00, B22D 25/00, F01D 5/18

(54) **INTEGRALLY FORMED TURBINE ROTOR STAGE**

(71) Applicant: Siemens Aktiengesellschaft, 80333 München (DE)
(72) Inventor: Balandier, Quentin Luc, Lincoln, LN5 7QN (GB)
(74) Representative: Maier, Daniel Oliver

(57) **Abstract**

A turbine rotor stage (200) operable for use in a turbo machine comprises a turbine rotor blade portion (210) integrally formed with a turbine rotor disc portion (212) by an additive manufacturing process.

## Description

The present disclosure relates to a turbine rotor stage operable for use in a turbo machine integrally formed by an additive manufacturing process.

### Background

Turbine rotors in gas turbine engine are made from assemblies comprising a high number of components which must be assembled. This results in loss in performance because of leakage between gaps, cost of precision manufacturing of each part and cost of assembly due to the length of time required to assemble the part correctly.

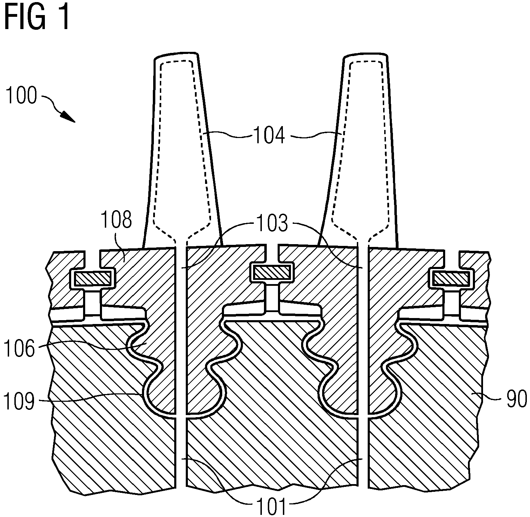

Turbine rotors in conventional gas turbine engines are made from blade and disc assemblies, for example as shown in Figure 1 which shows a cross-sectional view of rotor blades 100. Each rotor blade 100 comprises an aerofoil portion 104, a root portion 106 and a platform 108 from which the aerofoil extends.

The rotor blades 100 are fixed to the rotor disc 90 by means of their root portions 106, through which flow passages 101, 103 may extend into a cavity in the aerofoil portion 104. The root portions 106 have a shape that corresponds to notches (or grooves) 109 in the rotor disc 90, and are configured to prevent the rotor blade 100 from detaching from the rotor disc 102 in a radial direction as the rotor disc 102 spins. Several rotor stages may be assembled together and connected to engine shafts using tie bolts to form a multi-stage rotor. While effective, such an arrangement requires extra material, and hence mass, in order to produce the features that hold the rotor blades, discs and stages together, as well as requiring complex ceiling arrangements to enable cooling flow.

Additionally the design of turbine components involves considering material properties and failure mechanism, as during operation of the turbine, any such failure can lead to the release of debris with very high energy. If the material of the turbine blades or the turbine disc fails, debris of these parts can be released and strike through the housing and other protective shielding. Energy of a disc debris is usually too high for the debris to be contained.

To avoid these material failure modes, the turbine blades and the turbine disc consist of high strength metal alloys which may be cast, forged. However, experience shows that despite all precautions, isolated material cracks still can exist on a microscopic scale which during operation of the turbine propagate and grow to an undesirable and dangerous level.

Hence a turbine rotor stage having a structure made of fewer components than conventional arrangements and which overcomes the issues of material failure modes of conventional arrangements, is highly desirable.

### Summary

According to the present disclosure there is provided apparatus as set forth in the appended claims. Other features of the invention will be apparent from the dependent claims, and the description which follows.

Accordingly there may be provided a turbine rotor stage (200) operable for use in a turbo machine comprising: a turbine rotor blade portion (210) integrally formed with a turbine rotor disc portion (212) by an additive manufacturing process.

The rotor blade portion (210) may be provided as a base portion (310B) integrally formed with the turbine rotor disc portion (212), and a turbine aerofoil element (310A) may be formed by a different manufacturing process and integrated with the rotor blade base portion (310B) to form an integrated structure.

A cooling passage (230) may extend from an inlet (232) provided on the rotor disc portion (212) through the rotor blade portion (210) to an outlet (234).

The cooling passage (230) may extend from the inlet (232) provided on the rotor disc portion (212) and divide into sub-passages (230A, 230B, 230C) in the rotor disc portion (212). Each sub-passage (230A, 230B, 230C) may extend through a different rotor blade portion (210A, 210B, 210C) provided on the rotor disc portion (212) to an outlet (234A, 234B, 234C) on its respective rotor blade portion (210A, 210B, 210C).

The turbine rotor stage may also comprise an external wall (240) which defines at least one cavity (242) which is at least partly filled with a lattice structure (244).

The cavity (242) may be provided in the turbine rotor blade portion (210) and/or the turbine rotor disc portion (212).

The cooling passage (230) may be defined by an internal wall (250) which is spaced apart from the external wall (240) and supports the lattice (244).

The density of the lattice structure (244) may decrease with distance from the external wall (240).

The cooling passage (230) may be in part filled by a lattice structure (244).

The density of the lattice structure (244) may decrease with distance from the external wall (240) and then increases towards the cooling passage wall (250).

Lattice density may be highest at predetermined high stress locations.

The turbine rotor disc portion (212) may be made from a first material, and the turbine rotor blade portion (210) may be made from the first material or a second material different to the first material.

The lattice structure (244) may be made from the first material, the second material, or a third material different to the first material and second material.

There may also be provided a plurality of turbine rotor stages (200) according the to present disclosure integrally formed with one another, wherein the cooling passage (230) which extends from the inlet (232) on one of the rotor stages (200) extends to an outlet (234) on the rotor component.

The cooling passage (230) may extend through at least two rotor blade portions (210) between the inlet (232) and an outlet (234) on each of the rotor blade portions (210).

There may also be provided a turbo machine comprising a turbine rotor stage (200) and/or a turbine rotor component (400) according to the present disclosure.

Hence there is provided an integrally formed rotor stage that inherently overcomes some of the problems of the related art by being made as one piece rather than as an assembly or fabrication.

Additionally the provision of a lattice structure increases strength of the arrangement while also making it inherently less prone to material failure, as the lattice is inherently more crack tolerant than solid materials used in arrangements of the related art.

### Brief Description of the Drawings

Examples of the present disclosure will now be described with reference to the accompanying drawings, in which:
Figure 1 shows a cross sectional view of an arrangement of the related art, as already discussed in the background section;
Figure 2 shows an example of a gas turbine engine which may incorporate a rotor stage or rotor component of the present disclosure;
Figure 3 shows a cross sectional view of a first example of a rotor stage of the present disclosure;
Figure 4 shows a cross sectional view of a second example of a rotor stage of the present disclosure;
Figure 5 shows a cross sectional view of a first example of a region of a rotor stage of the present disclosure;
Figure 6 shows an alternative example of a cross-sectional view of a region of a rotor component according to the present disclosure;
Figure 7 shows a cross sectional view of a third example of a rotor stage of the present disclosure;
Figure 8 shows a cross sectional view of a fourth example of a rotor stage of the present disclosure;
Figure 9 shows a cross sectional view of a fifth example of a rotor stage of the present disclosure;
Figure 10 shows a cross sectional view of a sixth example of a rotor stage of the present disclosure;
Figure 11 shows a cross sectional view of a seventh example of a rotor stage of the present disclosure;
Figure 12 shows an alternative example of a rotor stage, and
Figure 13 shows a picture of a lattice structure according to the present disclosure.

### Detailed Description

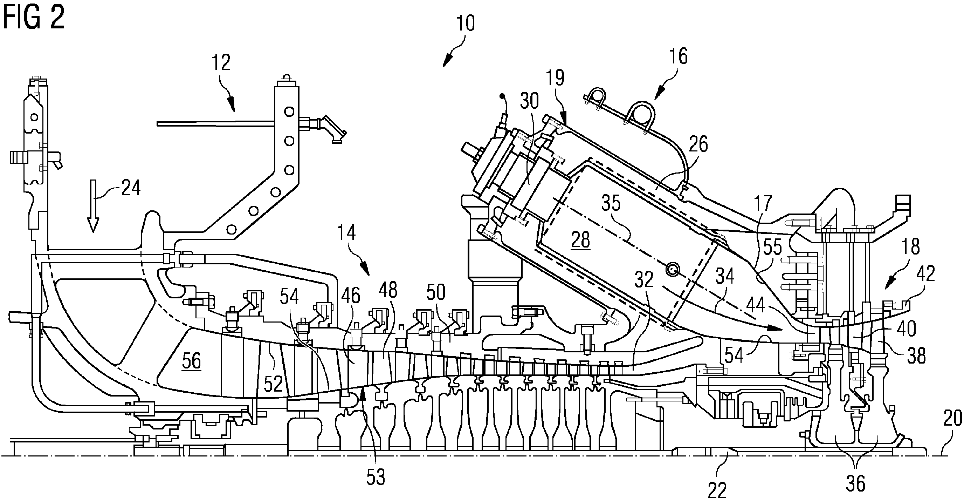

Figure 2 shows an example of a gas turbine engine 10 in a sectional view. The gas turbine engine 10 comprises, in flow series, an inlet 12, a compressor or compressor section 14, a combustor section 16 and a turbine section 18 which are generally arranged in flow series and generally about and in the direction of a rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor 14 and delivered to the combustion section or burner section 16. The burner section 16 comprises a burner plenum 26, one or more combustion chambers 28 extending along a longitudinal axis 35 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.

The turbine section 18 comprises a number of blade carrying discs 36 attached to the shaft 22. In the present example, two discs 36 each carry an annular array of turbine blades 38 are shown. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas 34 from the combustion chamber 28 enters the turbine section 18 and drives the turbine blades 38 which in turn rotate the shaft 22. The guiding vanes 40, 44 serve to optimise the angle of the combustion or working gas 34 on the turbine blades 38.

The turbine section 18 drives the compressor 14, i.e. particularly a compressor rotor. The compressor 14 comprises an axial series of vane stages 46, or guide vane stages 46, and rotor blade stages 48. The rotor blade stages 48 comprise a rotor disc supporting an annular array of blades. The compressor 14 also comprises a casing 50 that surrounds the rotor blade stages 48 and supports the guide vane stages 46. The guide vane stages 46 include an annular array of radially extending guide vanes 7 (not shown in Figure 1) that are mounted to the casing 50. The guide vanes 7, hereinafter also referred to as the vanes 7, are provided to present gas flow at an optimal angle for the blades of the rotor blade stage 48 that is present adjacent to and downstream of, with respect to a flow direction of the air 24 along the compressor 14 at a given engine operational point.

Some of the guide vane stages 46 have variable guide vanes 7 (not shown in Figure 1), where the angle of the guide vanes 7, about their own longitudinal axis (not shown), can be adjusted for angle according to air flow characteristics that can occur at different engine operations conditions. Some of the other guide vane stages 46 have stationary guide vanes 7 (not shown in Figure 1) where the angle of the guide vanes 7, about their own longitudinal axis, is fixed and thus not adjustable for angle. The guide vanes 7 i.e. the stationary and the variable guide vanes are well known in the art of compressors 14 and thus have not been described herein in detail for sake of brevity.

The casing 50 defines a radially outer surface 52 of the passage 56 of the compressor 14. The guide vane stages 46 and the rotor blade stages 48 are arranged in the passage 56, generally alternately axially. The passage 56 defines a flow path for the air through the compressor 14 and is also referred to as an axial flow path 56 of the compressor 14. The air 24 coming from the inlet 12 flows over and around the guide vane stages 46 and the rotor blade stages 48. A radially inner surface 54 of the passage 56 is at least partly defined by a rotor drum 53 of the rotor which is partly defined by the annular array of blades.

The present method and system is described with reference to the above exemplary turbine engine having a single shaft or spool connecting a single, multi-stage compressor and a single, one or more stage turbine. However, it should be appreciated that the present system and method is equally applicable to two or three shaft engines and which can be used for industrial, aero or marine applications. Furthermore, the cannular combustor section arrangement 16 is also used for exemplary purposes and it should be appreciated that the present technique is equally applicable to gas turbine engines 10 having annular type and can type combustion chambers.

The terms axial, radial and circumferential are made with reference to the rotational axis 20 of the engine, unless otherwise stated.

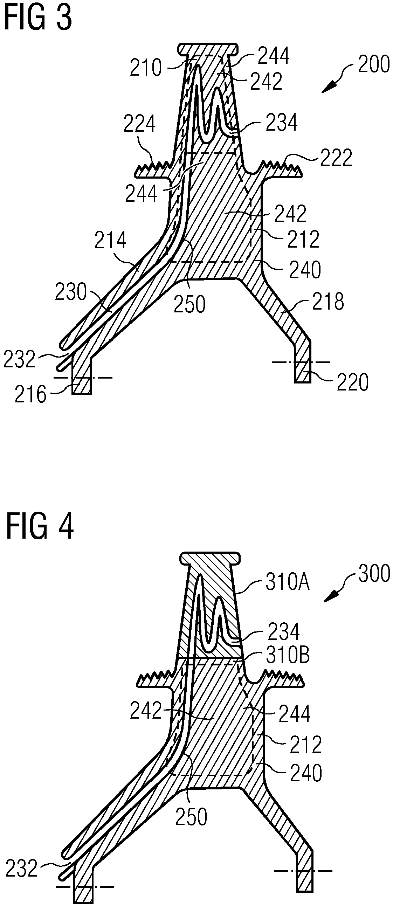

Figure 3 shows a cross sectional view of a first example of a rotor stage 200 according to the present disclosure. This is a turbine rotor stage 200 operable for use in a turbo machine. The turbine rotor stage comprises a turbine rotor blade portion 210 integrally formed with a turbine rotor disc portion 212. That is to say, the turbine rotor blade portion 210 and the turbine rotor disc portion 212 are integrally formed by an additive manufacturing process to form a turbine rotor stage according to the present disclosure.

In the example shown the disc portion 212 comprises a drive arm 214 which extends radially inward from one side of the rotor disc portion 212 and terminates at a free end which provides a fixing point 216 for attachment to other engine components, for example a drive shaft akin to the shaft 22 shown in Figure 2. A further drive arm 218 may extend from a different side of the rotor disc portion 212, also terminating in a free end and fixing point 220 for attachment to other components, for example a shaft. The drive arms 214,218 may also be integrally formed with the turbine rotor disc portion 212, and hence also formed integrally by an additive manufacturing process with the turbine rotor blade portion 210 to form part of the rotor stage 200.

In other examples, the rotor stage may comprise only the rotor blade portion and disc portion, and not a drive arm 214, 218.

The rotor stage may also comprise sealing lands 222,224 which extend away from the rotor disc portion 212.

Additive manufacturing refers to processes used to create a three dimensional object in which layers of material are formed, under computer control, to create an object. Additive manufacturing, for example selective laser melting, provides a quick way to create an object according to the present disclosure.

Hence the arrangement of Figure 3 differs from a conventional rotor blade and disc arrangement, for example as shown in Figure 1, by virtue of the rotor blade and disc portion, and optionally a drive arm, being integrally formed rather than being made from a number of individual pieces, fabricated separately and then are joined together. Externally the geometry of the rotor stage 200 may be identical to its equivalent fabrication. However, internally its geometry is different, and improved, compared to examples of the related art, as will be described below.

Figure 4 shows an alternative rotor stage 300 which comprises most of the same features as the arrangement shown in Figure 3. As in the following examples, common features are shown and referred to using common reference numerals.

Figure 4 shows a turbine rotor stage 300 also operable for use as a turbo machine. In this example the rotor blade portion 210 is provided as a base portion 310B integrally formed with the turbine rotor disc portion 212, and a turbine aerofoil element 310A is formed by different manufacturing process and integrated with the rotor blade base portion 310B to form an integrated structure (i.e. rotor stage). Hence the base portion 310B and the blade element 310A are effectively integrally combined by the joining of their respective surfaces by some appropriate bonding technique (for example friction welding, laser welding etc). Hence in this example the turbine rotor disc portion and turbine rotor blade base portion 310B may be thought of providing a pre-cursor of a turbine rotor stage, to which a turbine aerofoil element 310A is attached. Put another way, once integrally joined, the base portion 310B and aerofoil element 310A of the Figure 4 example form a rotor blade portion 210 of the Figure 3 example.

The blade part 310A may be made by additive manufacturing, or alternatively may be made by a different manufacturing process such as a single crystal casting process. Regardless of how the blade part is manufactured, it is joined to the disc portion 212 to form an integrated structure.

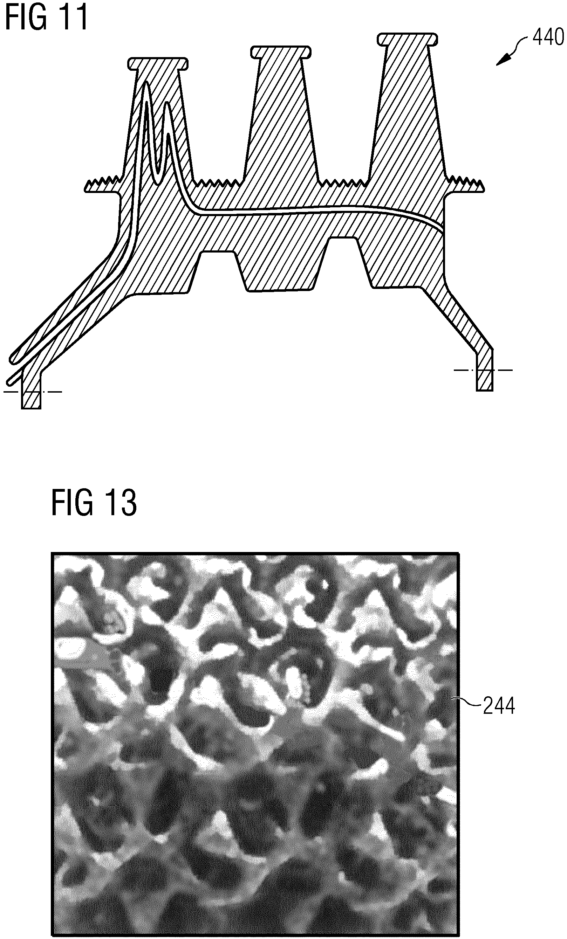

In the examples of Figure 3,4 a cooling passage 230 extends from an inlet 232, which may be provided in the disc portion (for example, as shown, the drive arm section of the rotor disc portion 212), and extends through the rotor disc portion 212 and rotor blade portion 210 to an outlet 234 defined in the rotor stage. In the example shown the outlet 234 is provided in the blade portion 210. In other examples, for example as shown in Figure 11, the outlet 234 is defined in the rotor disc portion 212.

The rotor stage 200 may be solid except for the provision of the cooling passage 230.

In alternative examples, for example as shown in Figures 3, 4, the turbine rotor stage 200, that is to say the integrally formed parts of the rotor stage 200, comprise an external wall 240 which defines at least one cavity 242, shown as a dotted line in Figures 3, 4. The cavity 242 may be at least partly filled with a lattice structure 244.

The cavity 242 may be provided only in the turbine blade portion 210. Alternatively the cavity 242 may be provided only in the turbine rotor disc portion 212. Alternatively the cavity may be provided in both the turbine rotor blade portion 210 and the turbine rotor disc portion 212. The cavity 242 may extend from the turbine rotor disc portion 212 into the turbine rotor blade portion 210.

The cavity may comprise one or more internal walls 250 which extend from the external wall 240 into the cavity 242.

The cooling passage 230 may be provided in one or more of the internal walls 250. That is to say, the cooling passage 230 may be defined by an internal wall 250. Hence the cooling passage 230, as shown in Figures 3,4, may first extend from the inlet 232 through the external wall 240 until it reaches an internal wall 250 which extends through the cavity 242, the internal wall 250 extending from one side of the cavity 242 through the rotor disc portion 212 and into the rotor blade portion 210 before extending to and terminating at the outlet 234.

In the example of Figure 4 the internal wall 250 ends at the point at which it joins the turbine aerofoil element 310A.

The cooling passage internal wall 250 may be spaced apart from the external wall 240. Additionally the internal wall 250 which defines a cooling passage may in part support the lattice 244. For clarity the detail of the lattice is not shown in Figures 3,4 although it is indicated by reference numeral 244.

The lattice structure 244 is covered/enclosed by the external wall 240.

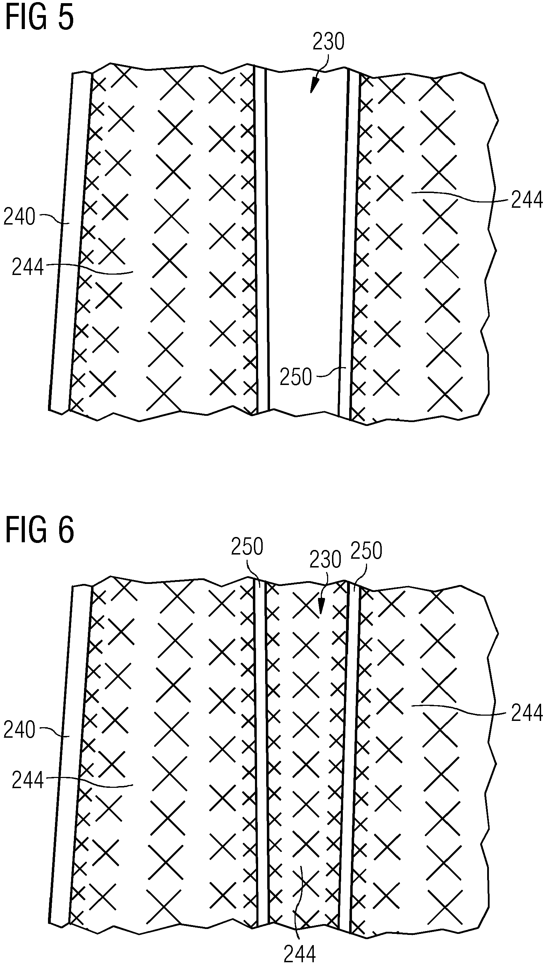

Figures 5, 6 show an enlarged region of a cross section of the rotor stage showing the external wall and internal wall 250, which defines cooling passage 230. In Figure 5 the lattice structure 244 (shown by crosses) is provided around the cooling passage internal wall 250 and extends between the internal wall 250 and the external wall 240. However the cooling passage 230 is free of lattice. Conversely, in the example of Figure 6, the cooling passage 230 is at least in part filled by a lattice structure 244.

As can be seen, the density of the lattice structure 244 decreases with distance from the rotor stage wall external wall 240. Between the external wall 214 and internal wall 250 the density of the lattice structure 244 decreases with distance from the external wall 214 and then increases in density towards the cooling passage wall 250.

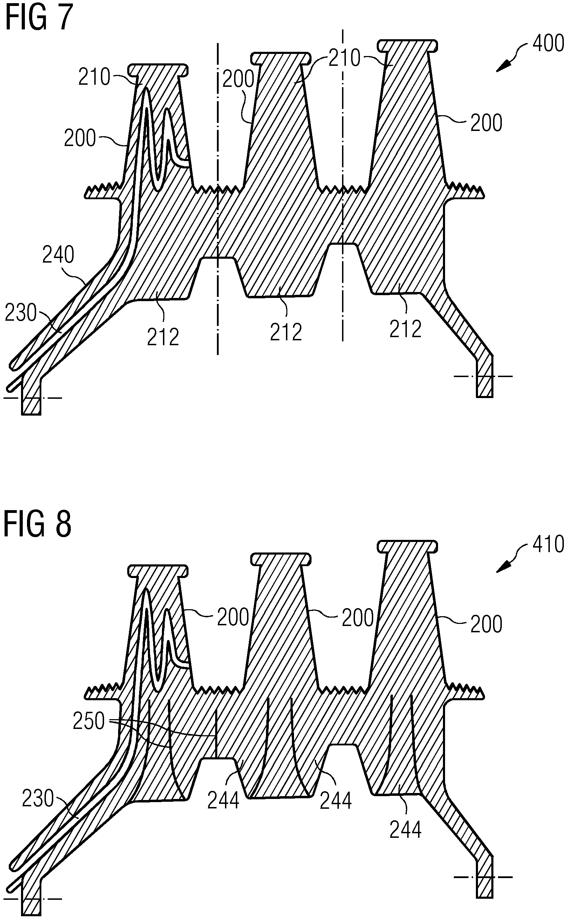

Additionally, in examples where other internal walls 250 are provided, which may not comprise cooling passages, for example as shown in Figure 8, the density of the lattice structure 244 decreases with distance from the external wall 214 and then increases in density towards the internal wall 250.

The lattice structure 244 conforms to the external wall 214 and internal walls 250.

The lattice structure may have a cellular structure. Hence the cellular structure has a first size adjacent to where it extends from the external wall 240 into the cavity, and the cellular structure has a second size, which is greater than the first size, at a distance away from the external wall 240. Put another way, the lattice structure has a greater density close to any wall from which it extends, and reduces as the distance away from the wall increases.

The lattice density may be highest at a predetermined high stress location. That is to say the lattice density may be highest where the rotor stage is most likely experience high loads and stresses, for example at the base of the aerofoil/blade portion 210, or at the radially inner region of the disc.

The change in lattice density may be provided as a smooth/gradual transition.

The lattice may vary in density in any direction, for example axially, (i.e. in the same direction as the axis of the shaft 22 to which the rotor stage is connected) circumferentially around the rotor stage and/or radially.

The lattice cell may be unstructured. In alternative examples, the lattice structure may be structured. According to one specific embodiment, the cavity 242 may comprise a stochastic lattice structure 244 (for example a foam structure).

The turbine disc portion 212 and internal wall 250 may be made from a first material, and the turbine blade portion 210 is made from the first material, or a second material different to the first material. The lattice structure 244 may be made from the first material, the second material or a third material different to the first material and different to the second material.

That is to say the disc portion, rotor blade portion, lattice and internal walls may be made from the same material, from different materials, or some are made from the same materials but others are made from different materials. Hence although the features may be formed integrally by an additive manufacturing method, a different material may be used to form the disc portion, rotor blade portion, lattice and internal walls while they are being integrally formed.

The examples of Figures 3, 4 relate to a single stage rotor. However there may also be provided a turbine rotor component comprising a plurality of integrally formed turbine rotor stages 200. An example of this is shown in Figure 7.

Hence whereas Figures 3,4 relate to a single integrally formed rotor stage 200, where the stage 200 refers to the provision of a turbine rotor blade portion 210 mounted to a disc portion 212, the example of Figure 7 comprises several such integrally formed stages 200. Hence there are provided a plurality of turbine rotor blade portions 210 connected to their respective turbine rotor disc portions 212. The plurality of turbine rotor disc portions 212 of each turbine rotor stage 200 are integrally formed with one another by an additive manufacturing technique. The cooling passage 230 extends from the inlet 232 on one of the rotor stages 200 and extends to an outlet 234 on the rotor component as with the previous examples. Hence there is provided a multi stage turbine rotor integrally formed by an additive manufacturing technique with a cooling passage 230 in at least the first stage of the rotor component.

As in the previous examples the component may be solid except for the provision of the cooling passage 230.

Alternatively one or more of the stages may comprise a cavity 242 which is in part filled with a lattice structure 244 as described in relation to Figure 3 or 4. As shown in Figure 8 internal walls 250 may be provided in combination with the cooling passage 230 in order to provide support for the lattice structure 244. The cavity 244 may extend between two or more of the disc portions 212. Alternatively a cavity 244 may be provided in each disc portion 212, separated by an internal wall 250.

As in the previous examples the cavity 242 and lattice structure 244 may be provided only in the turbine blade portion 210. Alternatively the cavity 242 and lattice structure 244 may be provided only in the turbine rotor disc portion 212. Alternatively the cavity and lattice structure 244 may be provided in both the turbine rotor blade portion 210 and the turbine rotor blade portion 212. The cavity 242 and lattice structure 244 may extend from the turbine rotor disc portion 212 into the turbine rotor blade portion 210.

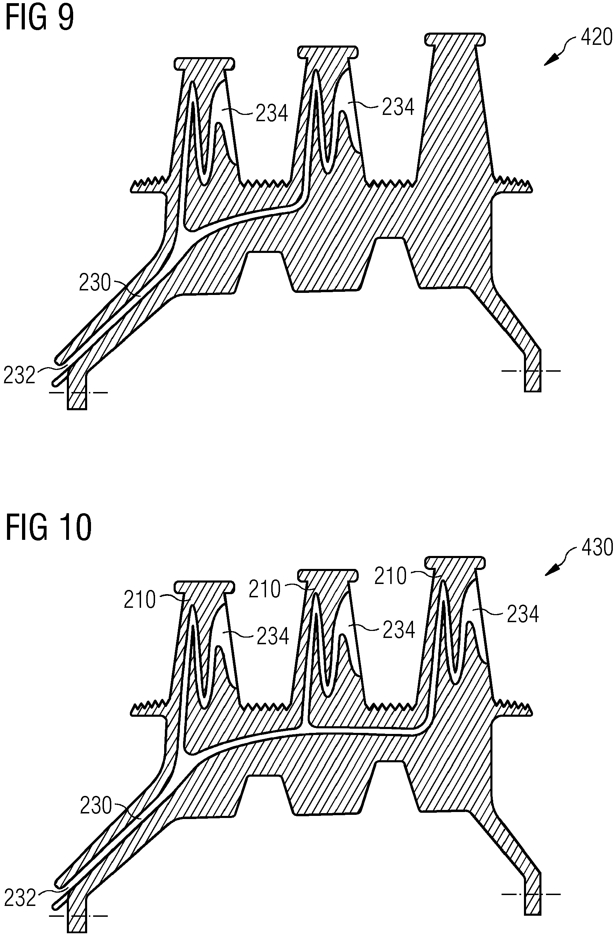

In Figure 9 there is shown a further example of a rotor component 420 in which the cooling passage extends through at least two rotor blade portions 210 between the inlet 232 and outlet 234 on the rotor component 420. Hence there is no cooling passage 230 provided in the third stage of the rotor component 420.

In Figure 10 there is shown a further example of a rotor component 430 in which the cooling passage may also extend through three rotor blade portions 210 between the inlet 232 and outlet 234 on the rotor component 430.

Hence in the examples of Figures 9,10 the cooling passage 230 may start as a single passage which extends through all three stages, and branches off into each of the rotor blade portions 210. Hence the cooling passage 230 extends between the inlet 232 and outlet 234 via a rotor blade portion 210 on each of the stages of the rotor component.

In the alternative example shown in Figure 11, the cooling passage 230 extends from the inlet 232 to an outlet 234 on the rotor disc portion of the final stage of the turbine component 440. In each of the examples of Figures 9, 10, 11 there may be provided internal walls 250, lattice and cavities as previously described.

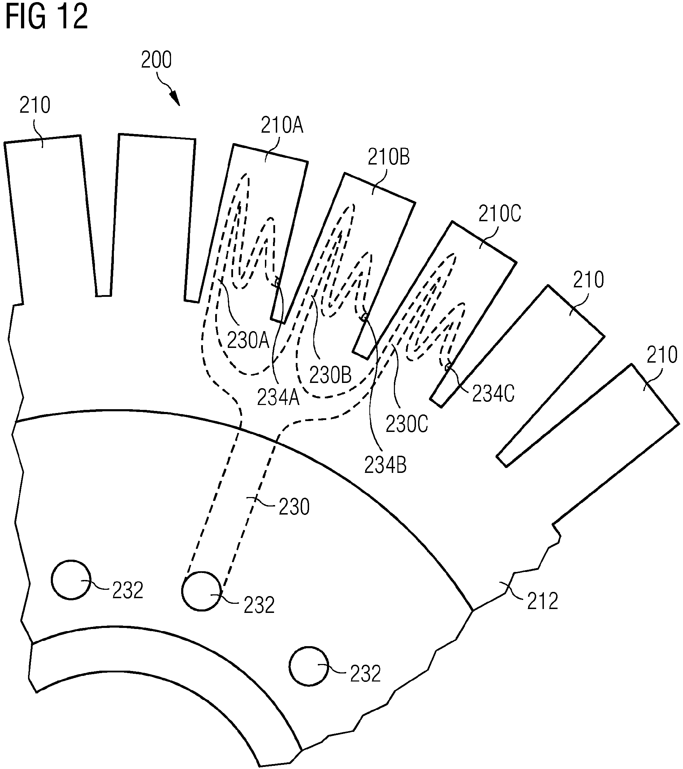

In a further example, shown in Figure 12, the cooling passage 230 extends from the inlet 232 provided on the rotor disc portion 212 and divides into sub-passages 230A, 230B, 230C in the rotor disc portion 212. Each sub-passage 230A, 230B, 230C extends through a different rotor blade portion 210A, 210B, 210C provided on the same rotor disc portion 212 to an outlet 234A, 234B, 234C on its respective rotor blade portion 210A, 210B, 210C.
Although the examples show at most three stages, in other examples further stages may be provided as part of the turbine rotor component.

Figure 13 shows a picture of a lattice structure 244 manufactured with an additive manufacturing method which is suitable to fill a hollow cavity/compartment 242 of the rotor stages/components of the present example. The lattice structure 244 is made up of elongated lattice elements, which are joined together at their ends. The average angle between two neighbouring lattice elements may typically be between 90 and 180°. The overall lattice structure is able to support a force or a load which is applied to the lattice structure. This force or load is distributed over a number of lattice elements over a larger volume. If the lattice structure arranged to fill the entire hollow compartment 242, the load or the force also can also be directed onto other wall sections of the turbine rotor.

In case that one lattice element breaks due to material failure, the load or the force acting on the entire lattice structure 244 is redistributed over the entire lattice structure, while the entire lattice structure 244 remains intact. In particular, no further breaks result from the local failure in other lattice elements 244 and the local failure does not propagate as would be the case if the volume was filled with solid metallic alloy. Thus, the consequences of the material failure can be contained to a small local area.

Lattice structure 244 may be made of a metal alloy. Preferably, the metal alloy is identical to the one from which the turbine rotor disc portion 212 is formed.

Hence there may be provided a turbine rotor stage, or a turbine rotor component comprising a number of rotor stages which are integrally formed, comprising a turbine rotor stage or a turbine rotor component.

The lattice structure, where provided, means that cracks within the disc element will not propagate beyond the failure point. That is to say cracks are limited to the cells in which they appear, but will not propagate throughout the whole structure. Hence small defects which arise during manufacture or in service will not result in failure of the component, even though cracks of a similar size in a conventionally manufactured component (e.g. by casting or forging) may not be serviceable.

As the rotor stage/component of the present disclosure in integrally formed, although its external geometry and internal geometry will be the same as a part made by a conventional manufacturing, it may have a lower mass. This is because there are no fabrication interfaces (e.g. disc slots and blade roots), and neither are there any bolts or fixing member holding the different elements together. Hence the overall arrangement is lighter, with less windage than a conventional design, and overall less material is used.

As the rotor stage / component of the present disclosure may be made by an additive manufacturing technique, it is also significantly easier to manufacture than a cast, forged or single crystal component, which consequential reduction in cost and manufacturing lead time.

Hence while the examples above are described as being suitable for use in an industrial gas turbine, and hence are also suitable for use in a gas turbine for an aircraft or large marine vessel, the present disclosure may also be deployed in a land based vehicle, for example road or rail vehicle as an alternative to a reciprocating petrol or diesel engine.

Use of different materials in the forming of the rotor stage/component allow for materials with optimal properties to be used.

The rotor stage and component of the present disclosure also provides an advantageous cooling arrangement. Since the cooling passages are continuous between inlet and outlet, with no interruptions due to interfaces between components, fluid leaks, pressure losses and stress raising feature are reduced compared to examples of the related art.

Additionally, the cooling passage inlet can be provided at a low radius, which is advantageous as the centrifugal effect may pressurise the cooling air passing through the passage to push it further into the rotor.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A turbine rotor stage (200) operable for use in a turbo machine comprising:
a turbine rotor blade portion (210)
integrally formed with a turbine rotor disc portion (212)
by an additive manufacturing process.

2. A turbine rotor stage (200) as claimed in claim 1 wherein
the rotor blade portion (210) is provided as a base portion (310B) integrally formed with the turbine rotor disc portion (212); and
a turbine aerofoil element (310A) is
formed by different manufacturing process; and
integrated with the rotor blade base portion (310B)
to form an integrated structure.

3. A turbine rotor stage (200) as claimed in claim 1 or claim 2 further comprising:
a cooling passage (230) which extends
from an inlet (232) provided on the rotor disc portion (212)
through the rotor blade portion (210) to
an outlet (234).

4. A turbine rotor stage (200) as claimed in claim 3 wherein:
the cooling passage (230) extends
from the inlet (232) provided on the rotor disc portion (212) and
divides into sub-passages (230A, 230B, 230C) in the rotor disc portion (212);
each sub-passage (230A, 230B, 230C) extending through a different rotor blade portion (210A, 210B, 210C) provided on the rotor disc portion (212);
to an outlet (234A, 234B, 234C) on its respective rotor blade portion (210A, 210B, 210C).

5. A turbine rotor stage (200) as claimed in any one of the preceding further comprising:
an external wall (240) which defines
at least one cavity (242) which is at least partly filled with a lattice structure (244).

6. A turbine rotor stage (200) as claimed in claim 5 wherein
the cavity (242) is provided in
the turbine rotor blade portion (210) and/or
the turbine rotor disc portion (212).

7. A turbine rotor stage (200) as claimed in claim 5 or claim 6 when dependent on claim 3 wherein:
the cooling passage (230) is defined by an internal wall (250) which is spaced apart from the external wall (240); and
supports the lattice (244).

8. A turbine rotor stage (200) as claimed in any one of claims 5 to 7 wherein
the density of the lattice structure (244) decreases with distance from the external wall (240).

9. A turbine rotor stage (200) as claimed in claim 8 wherein
the cooling passage (230) is in part filled by a lattice structure (244).

10. A turbine rotor stage (200) as claimed in any one of claims 8 to 9 wherein
the density of the lattice structure (244) decreases with distance from the external wall (240) and then increases towards the cooling passage wall (250).

11. A turbine rotor stage (200) as claimed in any one of claims 5 to 10 wherein lattice density is highest at predetermined high stress locations.

12. A turbine rotor stage (200) as claimed in any one of the preceding claims wherein
the turbine rotor disc portion (212)
is made from a first material, and
the turbine rotor blade portion (210) is made from:
the first material or
a second material different to the first material.

13. A turbine rotor stage (200) as claimed in claim 13 when dependent on claim 5 wherein
the lattice structure (244) is made from :
the first material,
the second material, or
a third material different to the first material and second material.

14. A turbine rotor component (400) comprising:
a plurality of turbine rotor stages (200) as claimed in any one of claims 1 to 13 when dependent on claim 3 integrally formed with one another; wherein
the cooling passage (230) which extends from the inlet (232) on one of the rotor stages (200) extends to an outlet (234) on the rotor component.

15. A turbine rotor component (400) as claimed in claim 14 wherein
the cooling passage (230) extends through at least two rotor blade portions (210) between the inlet (232) and an outlet (234) on each of the rotor blade portions (210).

16. A turbo machine comprising a turbine rotor stage (200)
as claimed in any one of claims 1 to 13
or a turbine rotor component (400) as claimed in any one of claims 14, 15.
